# EUROPEAN PATENT APPLICATION

(11) **EP 1 108 586 A2**
(43) Date of publication of application: **20.06.2001**
(21) Application number: 00204494.9
(22) Date of filing: 13.12.2000
(51) Int. Cl.: B60K 15/03

(54) **Permeation barrier fuel tank**

(30) Priority: 18.12.1999 US 172562 P; 01.09.2000 US 653675
(71) Applicant: Delphi Technologies, Inc., Troy, MI 48007 (US)
(72) Inventor: Short, William T., Southfield, MI 48076 (US)
(74) Representative: Denton, Michael John

(57) **Abstract**

A permeation barrier fuel tank (10) for a vehicle includes a tank shell (12) having a wall formed from a plurality of layers (30,32,34,36,38,40). The layers (30, 32,34,36,38,40) include at least an inner layer (30), an outer layer (38), a fuel permeation barrier layer (40) disposed between the inner layer (30) and the outer layer (38), and an amorphous carbon layer disposed adjacent the inner layer (30).

## Description

### TECHNICAL FIELD

The present invention relates generally to fuel tanks for vehicles and, more particularly, to a permeation barrier fuel tank for a vehicle.

### BACKGROUND OF THE INVENTION

It is known to provide a fuel tank such as a plastic fuel tank in a vehicle to hold fuel to be used by an engine of the vehicle. In some vehicles, the plastic fuel tank has an overall thinner wall thickness, than blow-molded tanks, without sacrificing mechanical strength. However, there is concern that the thinner wall thickness may prevent the fuel tank from passing a permeation test.

One commercial approach to resolve this concern is to thicken the tank, which increases the weight, cost and reduces fuel capacity of the fuel tank. Another commercial approach is to add metal sheets or shields, which increases the weight and cost of the plastic fuel tank.

Therefore, it is desirable to provide a fuel tank for a vehicle that has a more effective fuel permeation barrier to prevent evaporative emission. It is also desirable to provide a permeation barrier fuel tank for a vehicle that significantly reduces evaporative emission, weight and cost of the fuel tank.

### SUMMARY OF THE INVENTION

It is, therefore, one object of the present invention to provide a new permeation barrier fuel tank for a vehicle.

It is another object of the present invention to provide a fuel tank that significantly reduces evaporative emission without unduly increasing weight and cost.

To achieve the foregoing objects, the present invention is a fuel permeation barrier fuel tank for a vehicle including a tank shell having a wall formed from a plurality of layers. The layers include at least an inner layer, an outer layer, a fuel permeation barrier layer disposed between the inner layer and outer layer, and an amorphous carbon barrier layer on the inner layer opposite the outer layer.

One advantage of the present invention is that a permeation barrier fuel tank is provided for a vehicle that has enhanced resistance to fuel permeation leading to less evaporative emissions. Another advantage of the present invention is that the permeation barrier fuel tank uses an amorphous carbon permeation barrier layer, resulting in weight and cost savings of the fuel tank. Yet another advantage of the present invention is that the permeation barrier fuel tank significantly improves barrier properties and lowers cost of the fuel tank. Still another advantage of the present invention is that the permeation barrier fuel tank uses a relatively rapid plasma deposition of carbon layer on the inner layer to enhance anti-permeation properties of the fuel tank. A further advantage of the present invention is that the plasma deposition process is much cleaner and avoids highly toxic materials of acid gas treatments, making it a much preferred process from a manufacturing standpoint.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a permeation barrier fuel tank, according to the present invention.

Figure 2 is an enlarged sectional view of the permeation barrier fuel tank of Figure 1.

### DESCRIPTION OF THE PREFERRED EMBODIMENT

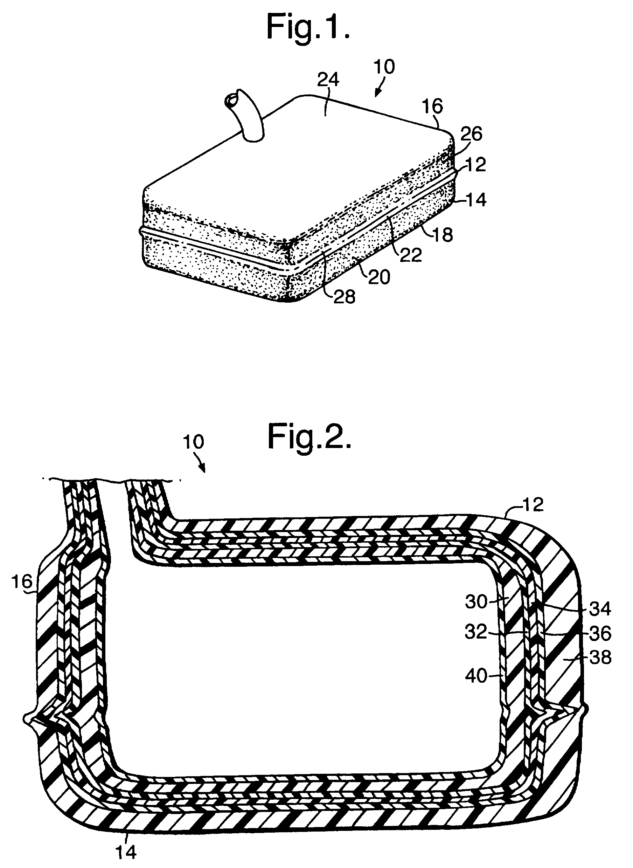

Referring to the drawings and in particular Figures 1 and 2, one embodiment of a permeation barrier fuel tank 10, according to the present invention, is shown for a vehicle (not shown). The permeation barrier fuel tank 10 includes a tank shell 12. In this embodiment illustrated, the tank shell 12 is of a generally rectangular type. The tank shell 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together to form a seam by suitable means such as by thermoforming, compression molding or friction welding. The lower half shell 14 and upper half shell 16 are made of a rigid material such as a thermoformable plastic.

Referring to Figures 1 and 2, the permeation barrier fuel tank 10 has the base walls 18,24, side walls 20,26, and flanges 22,28 formed from a plurality of layers 30,32,34,36,38,40. The first or inner layer 30 is made from a thermoformable polymer such as a high-density polyethylene (HDPE) or similar polyolefin, which is conventional material known in the art. The first layer 30 has a predetermined thickness of approximately two millimeters (2.00 mm).

The second layer 32 is a tie-layer made from an adhesive such as maleated polyethylene (ADMER Grade GT6A), which is a conventional material known in the art. The second layer 32 has a predetermined thickness of approximately 0.05 mm to approximately 1.0 mm.

The third layer 34 is made from a hydrocarbon barrier material such as ethylene vinyl alcohol copolymer (EVOH), which is a conventional material known in the art. The third layer 34 has a predetermined thickness of approximately 0.1 mm to approximately 1.0 mm.

The fourth layer 36 is a tie-layer made from an adhesive such as maleated polyethylene (ADMER Grade GT6A), which is a conventional material known in the art. The fourth layer 36 has a predetermined thickness of approximately 0.05 mm to approximately 1.0 mm.

The fifth or outer layer 38 is made from a thermoformable polymer such as a high-density polyethylene (HDPE) or similar polyolefin, which is a conventional material known in the art. The fifth layer 38 has a predetermined thickness of approximately two millimeters (2.00 mm).

The sixth or second barrier layer 40 is made from an amorphous carbon material, which is a conventional material known in the art. The sixth layer 40 has a predetermined thickness of approximately 0.005 mm or less. The sixth layer 40 is applied to an inner surface of the first layer 30 by internal plasma applied hydrogenated amorphous carbon coating.

In manufacturing the permeation barrier fuel tank 10, several conventional processes may be used. Preferably, the permeation barrier fuel tank 10 is formed by a conventional thermoforming process wherein the first layer 30 is thermoformed along with the other four layers as a co-extruded sheet by heat and pressure. The sixth layer 40 is applied to the first layer 30 by plasma deposition with commercially available equipment, which is conventional and known in the art. The sixth layer 40 can be incorporated during the thermoforming process to the first layer 30 of the fuel tank 10 or to both half shells 14 and 16. The sixth layer 40 is deposited in a dense continuous layer over the first layer 30 to offer increased resistance to permeation by the fuel and/or fuel components, such as methanol or ethanol. It should be appreciated that the sixth layer 40 has a low thickness that virtually no weight is added to the fuel tank 10. It should also be appreciated that the sixth layer 40 need only be applied as a fractional micron thick coating to affect fuel permeation to improve anti-permeation properties.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A permeation barrier fuel tank (10) for a vehicle comprising:
a tank shell (12) having a wall formed from a plurality of layers (30,32,34,36,38,40);
said layers (30,32,34,36,38,40) comprising at least an inner layer (30), an outer layer (38), a fuel permeation barrier layer (34) disposed between said inner layer (30) and said outer layer (38), and an amorphous carbon layer (40) disposed adjacent said inner layer (30).

2. A permeation barrier fuel tank (10) as set forth in claim 1 wherein said fuel permeation barrier layer (34) is made of a hydrocarbon barrier material.

3. A permeation barrier fuel tank (10) as set forth in claim 1 wherein said inner layer (30) and said outer layer (38) are made of a thermoformable polymer material.

4. A permeation barrier fuel tank (10) as set forth in claim 1 wherein said amorphous carbon layer (40) is a hydrogenated amorphous carbon coating applied to an inner surface of said inner layer (30).

5. A permeation barrier fuel tank (10) as set forth in claim 1 including a first adhesive layer (32) disposed between said fuel permeation barrier layer (34) and said inner layer (30).

6. A permeation barrier fuel tank (10) as set forth in claim 1 wherein said fuel permeation barrier layer (34) comprises an EVOH material.

7. A permeation barrier fuel tank (10) as set forth in claim 1 including a second adhesive layer (36) disposed between said fuel permeation barrier layer (34) and said outer layer (38).

8. A permeation barrier fuel tank (10) as set forth in claim 1 wherein said amorphous carbon layer (40) is applied by plasma deposition.

9. A permeation barrier fuel tank (10) as set forth in claim 1 wherein said amorphous carbon layer (40) has a thickness of less than or equal to approximately 0.005 millimeters.

10. A permeation barrier fuel tank (10) as set forth in claim 1 wherein said amorphous carbon layer (40) is continuous over said inner layer (30).

11. A permeation barrier fuel tank (10) as set forth in claim 1 wherein amorphous carbon layer (40) has a thickness less than said inner layer (30) and said outer layer (38).

12. A permeation barrier fuel tank (10) for a vehicle comprising:
a tank shell (12) having a wall formed from a plurality of layers (30,32,34,36,38,40); and
said layers (30,32,34,36,38,40) comprising at least an inner layer (30), an outer layer (38), a fuel permeation barrier layer (34) disposed between said inner layer (30) and said outer layer (38), and an amorphous carbon layer (40) disposed adjacent said inner layer (30) and being made of a hydrogenated amorphous carbon material.

13. A permeation barrier fuel tank (10) as set forth in claim 12 wherein said inner layer (30) and said outer layer (38) are made of a polyethylene material.

14. A permeation barrier fuel tank (10) as set forth in claim 12 wherein said fuel permeation barrier layer (34) is made of an EVOH material.

15. A permeation barrier fuel tank (10) as set forth in claim 12 wherein said amorphous carbon layer (40) is applied by plasma deposition.

16. A permeation barrier fuel tank (10) as set forth in claim 15 including a first adhesive layer (32) disposed between said fuel permeation barrier layer (34) and said inner layer (30).

17. A permeation barrier fuel tank (10) as set forth in claim 16 including a second adhesive layer (36) disposed between said fuel permeation barrier layer (34) and said outer layer (38).

18. A permeation barrier fuel tank (10) as set forth in claim 12 wherein said amorphous carbon layer (40) has a thickness of less than or equal to approximately 0.005 millimeters.

19. A permeation barrier fuel tank (10) as set forth in claim 12 wherein said inner layer (30) and said outer layer (38) have a thickness greater than said amorphous carbon layer (40).

20. A fuel tank for a vehicle comprising:
a tank shell (12) having a wall formed from a plurality of layers (30,32,34,36,38,40);
said layers (30,32,34,36,38,40) comprising at least an inner layer (30) and an outer layer (38) comprising a polyethylene material, a fuel permeation barrier layer (34) comprising an EVOH material disposed between said outer layer (38) and said inner layer (30), and an amorphous carbon layer (40) disposed adjacent said inner layer (30), wherein said inner layer (30) and said outer layer (38) have a thickness greater than said amorphous carbon layer (40).
